# EUROPEAN PATENT APPLICATION

(11) **EP 0 780 149 A1**
(43) Date of publication of application: **25.06.1997**
(21) Application number: 95203478.3
(22) Date of filing: 20.12.1995
(51) Int. Cl.: B01D 33/048, F16G 13/04

(54) **Continuous filter belt**

(71) Applicant: ENTEC HOLLAND B.V., 2901 AM Capelle a/d IJssel (NL)
(72) Inventor: Peters, Jacobus Marius, 2906 SE Capelle a/d Ijssel (NL)
(74) Representative: Lobatto, Jacob Louis, Drs.

(57) **Abstract**

An installation for the removal of fine and coarse particles from waste water by way of a housing (11), provided with a continuous composed filter belt (10), provided with a supply for waste water and a discharge for separated particles and clarified water respectively , as well as a driving mechanism, wherein the filter belt (10), composed of a plurality of elements (21), is provided with one or more driving blocks (23, 32), each one provided with at least one cam (34), on which the driving mechanism acts.

## Description

The invention relates to a continuous filter belt, more specifically a continuous filter belt with an improved yield in comparison with known continuous filter belts in an installation for the removal of fine and coarse particles from waste water by way of a housing, provided with a driving mechanism.

US-A-5,102,536 describes a self-cleaning installation for filtering and sifting, wherein a loop shaped sieve is composed of links(chains), of which one end is provided with a foot extending towards the interior, said links being provided with rotation means driven by protuberances of a continuous belt. A rinsing system arranged over the sieve washes the solids in a collecting funnel, wherefrom the liquid is recirculated and the solids are disposed off as solid waste material.

US-A-4,812,231 describes a similar installation with link-means without an extending foot.

Such installations have a rather intricate mechanism for driving and propulsion and the removal of the waste material collected on the filter is not as good as desired as a consequence of amongst others relatively short depth of engagement for cams and by shielding of the hooks for that purpose by the shafts of the filter belt as well as in that with the rectangular hooks as used waste material may remain at the filter elements and will be difficult to rinse off.

The present invention provides an improvement with respect to the above state of the art in that a continuous filter belt is provided with an improved mechanism for driving and propulsion respectively of the filter belt in an installation for removing of fine and coarse particles from the waste water by means of a housing with a continuous filter belt, provided with a supply for the waste water and a discharge for separated particles and clarified water, as well as a driving device, wherein the filter belt, composed of a plurality of elements, is provided with one or more drive-blocks, each one provided with at least one cam, on which the driving mechanism acts, as will be elucidated in more detail by way of the apending drawings. Preferably each filter element of the filter belt is provided with at least one driving block, still more preferable that at least one filter element of the filter belt is provided on either side with at least one driving block, and most preferable each filter element of the filter belt is provided with one driving block on either side.

The present invention also provides an improved installation for releasing waste material, settled on the fine grating by means of one or more filter elements, wherein a filter element consists of a perforated material, the perforations of which having a diameter of 0.5 to 30 mm, more preferable 0.5 to 10 mm, as well as matching driving blocks, or at least one filter element composed of an asymmetrical sieve element, preferably provided with at least one hook, extending at the supply side and making an angle of from 10° tot 120°, more preferable from 60° tot 85°, with the direction of movement of the filter element that is proceeding upwards from the water, as well as connecting elements between the sieve elements, as well as at least one driving block. It is also prefered that the hook is rounded off at the section extending away from the filter element at the locations where otherwise rims would be present. The improvement according to the invention provides a better reliability in use of the installation, resulting in less break-downs and thus providing a higher yield.

The invention will now be described in more detail on the basis of the appending drawings Figs. 1 - 8, wherein:
Fig. 1 shows in Fig. 1a a front view and in Fig. 1b a side view of the composed filter belt according to the invention;
Fig. 2 shows a front view of connected sieve elements with connecting elements and driving blocks according to the invention;
Fig. 3 shows the driving system for the driving blocks according to the invention in Fig. 3a and a driving block according to the invention in Fig. 3b;
Fig. 4 shows a driving system for driving blocks with a recess according to the state of the art in Fig. 4a and a driving block according to the state of the art in Fig. 4b;
Fig. 5 shows in detail the depth of engagement for the cams on the driving chain and that in Fig. 5a according to the state of the art and in Fig. 5b according to the invention;
Fig. 6 shows a hook element according to the invention;
Fig. 7 shows a hook element according to the state of the anrt, and
Fig. 8 shows the shielding of the hook section of the hook element according to the state of the art.

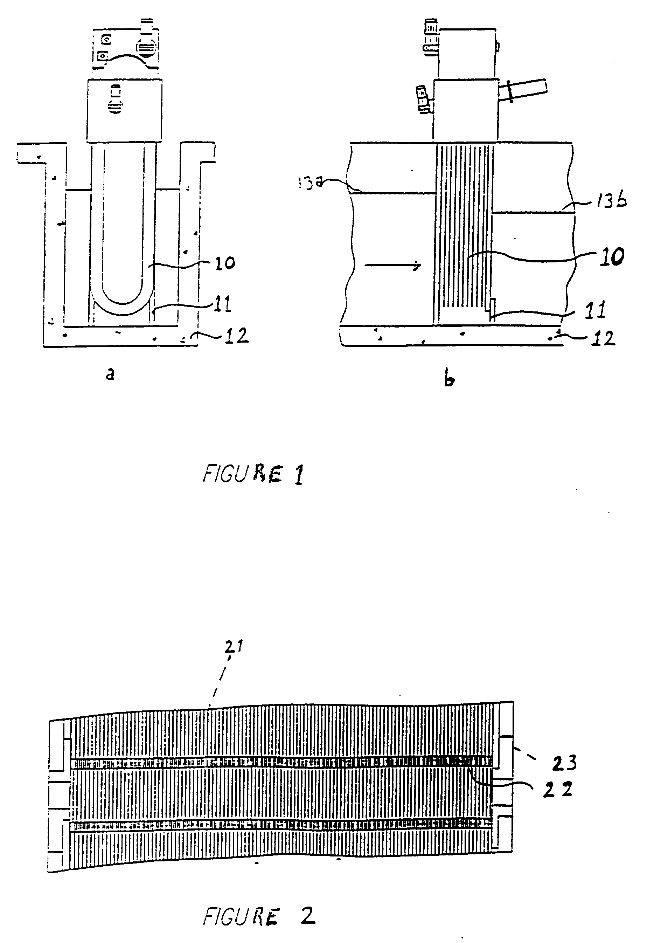

Fig. 1a shows in front view a composed filter belt 10 with a driving device (not shown) incorporated in a housing 11 in a trough 12; and Fig. 1b shows a side view of the composed filter belt with the same reference numbers for the same parts, wherein the fluid level 13a at the supply side, indicated with an arrow, is higher than the fuild level 13b at the discharge side. The supply of the waste water on the one hand and the discharge of collected fine and coarse particles as well as clarified water respectively on the other hand are carried out in a customary manner.

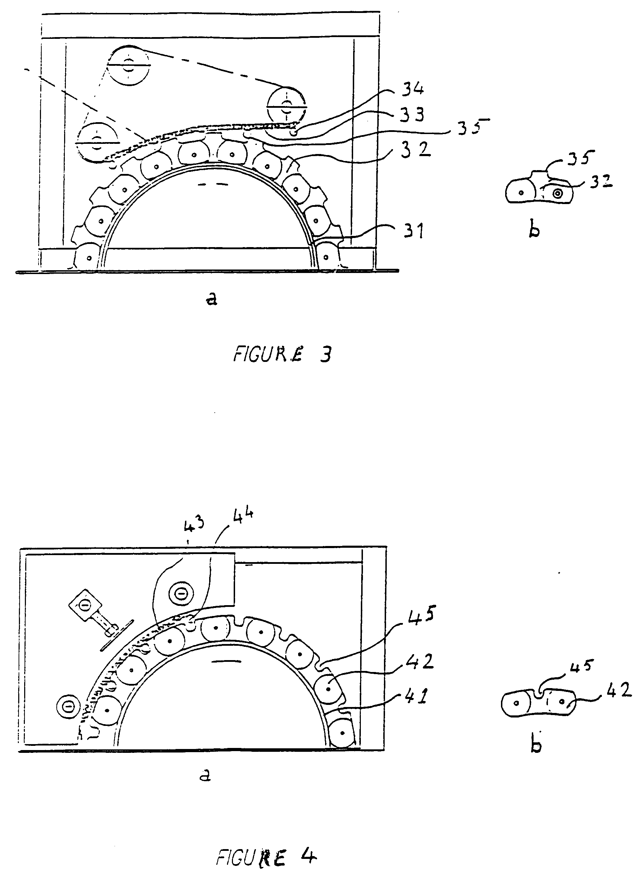

Fig. 2 shows a filter belt according to the invention composed of a sieve element 21, connecting elements 22 and driving blocks 23 (elucidated in more detail in Fig. 3);
Fig. 3 shows a section of a filter belt 31 provided with driving blocks 32 and a driving chain 33, said drivbing chain being provided with cams 34, wherein the driving blocks 32, as shown in more detail in Fig. 3a, are provided with a stop cam 35 at the side facing the driving chain. Fig. 3b shows a driving block a ccording to the invention;
Fig. 4 shows a corresponding filter belt 41 qccording to the state of the art, provided with driving blocks 42 and a driving chain 43, which driving chain 43 is provided with cams 44, wherein the driving blocks 42, as shown in more detail in Fig. 4a, are provided with a recess 45 at the side facing the driving chain. Fig. 4b shows a driving block according to the state of the art.

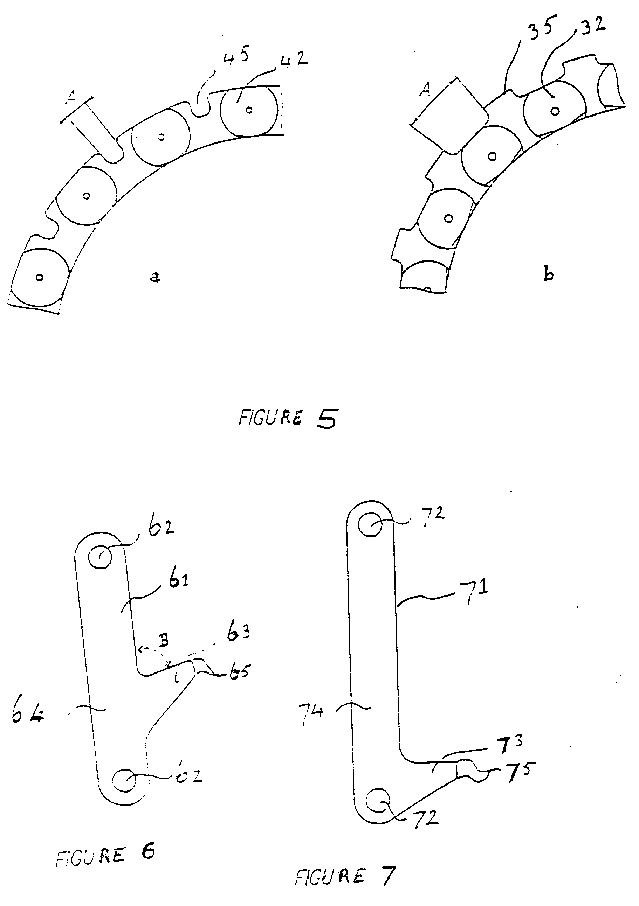

Fig. 5 shows the depth of engagement A for the cams (34, 44) of the driving chain (33, 43) in the filter belt and that in Fig. 5a according to the state of the art and in Fig. 5b according to the invention.
Fig. 6 shows a hook element 61 according to the invention, provided with fastening apertures 62 with a hook 63 positioned between these fastening apertures 62, which hook 63 is positioned under an angle B with the body 64 of the hook element 61 with its ends 65 rounded off.
Fig. 7 shows a hook element 71 according to the state of the art, provided with fastening apertures 72 with a hook 73 positioned over a fastening aperture 72, which hook 73 is positioned perpendicular to the body 74 of the hook element 71 with its rims 75 are sharp.

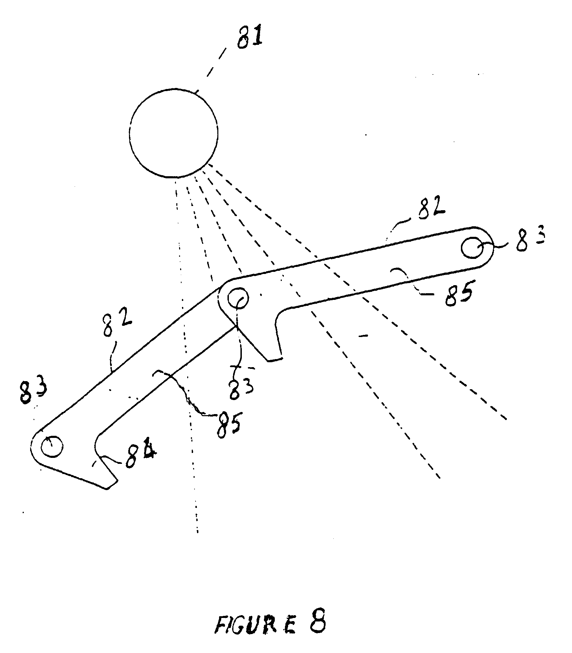

Fig. 8 shows a spraying tube 81 and connected hook elements 82 according to the state of the art, provided with fastening apertures 83 though which shafts (not shown) extend, with a hook 84 mounted on a fastening aperture, said hook 84 being perpendicular to the body 85 of the hook element.

In all the above Figures the shafts extending through the connecting elements and the connecting blocks are not shown.

As can be seen specifically by comparison of Fig. 3 with Fig. 4 and in the compillation thereof in Fig. 5 the arrangement according to the state of the art has the disadvantage, that once play occurs in the driving chain or a comparable driving device not all cams will fit in the recesses available to that end, which may result in irregular running of the filter belt or even disturbance, a defect that is avoided by the larger depth of engagement A, whereby the cams will still fit in the recesses intended for them even with play in the chain.

As will appear from Fig. 6 according to the invention in comparison with the state of the art according to Fig. 7 and Fig. 8, the hook is not mounted on the shaft, but staggered with respect to the shafts, so that the hook is not shielded by a shaft (see Fig. 8) on rinsing. In addition the ends of the hook are rounded off whereas the hook according to the state of the art shows rims, which may entrain waste material.

## Claims

1. An installation for the removal of fine and coarse particles from waste water by way of a housing, provided with a continuous composed filter belt (10), provided with a supply for waste water and a discharge for separated particles and clarified water respectively , as well as a driving mechanism, characterised in that the filter belt, composed of a plurality of elements, is provided with one or more driving blocks (23, 32), each one provided with at least one cam (34), on which the driving mechanism acts.

2. An installation according to claim 1, characterised in that each filter element (21) of the filter belt (31) is provided with at least one driving block (23,32).

3. An installation according to claim 1 or 2, characterised in that at least one filter element (21) of the filter belt (31) is provided with at least one driving block (23, 32) on either side.

4. An installation according to claim 3, characterised in that each filter element (21) of the filter belt (23, 32) is provided with at least one driving block (23, 32) on either side.

5. An installation according to any one of claims 1-4, characterised in that at least one filter element (21) consists of a perforated material, the perforations of which having a diameter of 0.5 to 30 mm.

6. An installation according to claim 5, characterised in that the perforations have a diameter of 0.5 to 10 mm.

7. An installation according to any one of claims 1-4, characterised in that at least one of the filter elements (21) is composed of an asymmetric sieve element, at least one driving block (23, 32) and connecting elements (24) with a subsequent sieve element.

8. An installation according to claim 7, characterised in that the asymmetric sieve element is provided with at least one hook (61), extending at the front side thereof.

9. An installation according to claim 8, characterised in that the hook (61) makes an angle of from 10° tot 120°, with the direction of movement of the filter element (21) that is proceeding upwards from the water.

10. An installation according to claim 9, characterised in that the hook (61) makes an angle of from 60° tot 85°.

11. An installation according to claim 10, characterised in that the hook (61) is rounded off at the ends (65) of the section extending away from the sieve element at the locations where otherwise rims would be present.
